# EUROPEAN PATENT SPECIFICATION

(11) **EP 0 344 547 B1**
(45) Date of publication and mention of the grant of the patent: **11.10.1995**
(21) Application number: 89109067.2
(22) Date of filing: 19.05.1989
(51) Int. Cl.: C08G 65/00

(54) **Improved process for the production of perfluoropolyethers substantially comprising perfluorooxyethylene and perfluorooxypropylene units**
Verfahren für die Herstellung von Perfluoroxyethylen- und Perfluoroxypropyleneinheiten enthaltenden Perfluoropolyäthern
Procédé pour la préparation de perfluoropolyéthers contenant des unités perfluorooxyéthylène et perfluorooxypropylène

(30) Priority: 20.05.1988 IT 2064988
(43) Date of publication of application: 06.12.1989
(73) Proprietor: AUSIMONT S.p.A., I-20121 Milano (IT)
(72) Inventor: Marchionni, Giuseppe, Dr., I-20133 Milan (IT); De Patto, Ugo, Dr., I-20020 Cogliate Milan (IT)
(74) Representative: Barz, Peter, Dr.

(56) References cited:
- FR-A- 1 585 601

## Description

The present invention relates to the production of perfluoropolyethers predominantly composed of units of the formulae 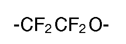 and 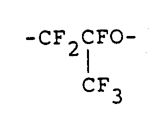 and terminal perfluoroalkyl groups, which products show an optimum combination of chemical and physical properties.

The process for producing said perfluoropolyethers is based on the low-temperature photo-oxidation of a mixture of perfluoropropene and tetrafluoroethylene, the subsequent decomposition of the peroxide groups contained in the resulting products and the fluorination of the end groups in order to convert them to perfluoroalkyl groups, and the optional regulation of the molecular weight in case the latter is too high for the intended use of the end product.

The various steps of the present process are based on well-known techniques. However, the products obtained according to the process of the present invention are the result of the application of specific working conditions which allow to prepare them at economically favourable costs and with high yields with respect to the starting perfluoroolefins.

The photo-oxidation of C₂F₄./C₃F₆ mixtures is known from US-A-3,442,942; 3,665,041 and 3,770,792 as well as from DE-A-18 17 826.

In said publications the specific operating conditions which, according to the present invention, are essential for obtaining the above products in high yields and high conversions with respect to the perfluoroolefins used as the starting material have not been taken into consideration. Particularly, the products disclosed in the examples of the above publications show a rather low ratio of C₂ to C₃ units.

According to the present invention, by adopting specific working conditions in the photo-oxidation of the C₂F₄./C₃F₆ mixture and by subsequent decomposition of the peroxy groups and conversion of the terminal groups to perfluoroalkyl end groups by means of special methods, perfluoropolyethers may be obtained, which have the general formula: 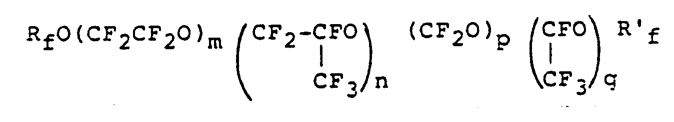 wherein:
Rₜ and R'_{f}, the same or different from each other, are terminal perfluoroalkyl groups selected from: -CF3, -C₂Fs and -C₃F₇; and
m,n,p and q which represent average values for the products which are generally composed of mixtures of individual compounds within the scope of the above formula, meet the following conditions:
   - the sum (m + n + p + q) is within the range of from 2 to 200;
   - the ratio (p + q)/(m + n + p + q) is smaller than or equal to 10/100, and preferably ranges from 0.5/100 to 4/100;
   - the ratio n/m is in the range of from 0.2 to 6, and preferably of from 0.5 to 3.
m, n, p and q are the same or different from each other. Both m and n preferably range from 1 to 100 (most preferred from 1 to 80) whereas both p and q preferably range from 0 to 80 (most preferred from 0 to 50).

As compared to the products known from the prior art, the products obtainable according to the process of the present invention are characterized by the following properties:
- a very low content of -CF₂0- units, which are known to constitute breakage points of the perfluoropolyether chain: as a consequence, they have a high stability to catalytic breakdown;
- a high value of the ratio n/m, which involves a higher content of C₃ units, and a decidedly lower viscosity, with the molecular weight being the same; therefore the products have a low viscosity also at very low temperatures, and at the same time have an extremely low vapour pressure due to their high molecular weight; furthermore, their pour point is lower, with the molecular weight being the same, which means that low-pour-point, low-volatility products are available through the process of the present invention.

Furthermore, with the process according to the present invention it is unexpectedly possible to obtain C₂ F₄ conversions which are much higher than those of the prior art, and are generally of the order of 90%.

Particularly, it can be observed that the products prepared according to the process of the present invention, as compared to the perfluoropolyethers obtained by means of the photooxidation of only C₂ F₄ alone (and thus not containing C₃ units, e.g. Fomblin ® Z), show a much smaller content of -CF₂0- groups, and therefore a much higher stability.

Furthermore, the present process is easier to carry out from a technical point of view and less expensive in that it does not require the use of solvents, which are needed, on the contrary, in the case of photo-oxidation of only C₂ F₄.

From US-A-3,770,792, it is known to prepare PFPE products containing both -CF₂CF₂0- and -CF(CF₃)-CF₂0- units by means of the simultaneous photochemical oxidation of C₂F₄ and C₃F₆. Under the operating conditions stated or suggested in the above patent and in particular, in the examples thereof, very high conversions and yields of useful products cannot be obtained, however. The highest yields given in the examples are 70% based on C₂ F₄ and 60% based on C₃F₆, while the maximum conversions are 60% for C2F4 and 15% for C₃F₆.

In particular, as regards the U.V. light, which is a key factor of the process, the above patent suggests to work under conditions such that the irradiation index I, as defined below, is at least 2, and preferably at least 3, and up to 50 in order to obtain a product not containing an excessively large amount of peroxy oxygen. Said index is represented by the formula: 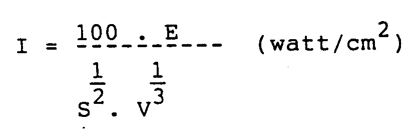 wherein:
E = U.V. energy at a wavelength of ≦330 nm in watts,
S = the surface area through which the energy E penetrates the system, in cm², and
V = the volume, in cm³, of the reaction system.

From the examples reported in the patent values of I of around 6 may be calculated; in example 9 it is shown that a low value of I (1.4) results in a high content of peroxy oxygen.

It has now surprisingly been found that compared to the results reported in the above patent yields and conversions can considerably be improved and that yields of more than 90% based on C₂F₄ and contemporaneously of approximately 90% based on C₃ F₆ and conversions higher than 60% for C₂ F₄ and of the order of 15%, and even higher, for C₃F₆, can be achieved.

These results may be obtained by adopting optimum working conditions, which are characterized, in particular, by specific values of the U.V. light intensity with respect to the volume of the liquid reaction phase and the flow rate of the gaseous reactants (0₂, C2F4, C₃F₆) which are fed as continuous stream.

As regards the radiation energy E suitable for the photochemical effects in the reaction, said energy corresponding to radiation having a wavelength of ≤300 nm, it was found that the intensity of said radiation, with respect to both the volume of the liquid reaction phase (V_{liq}) and the flow rate (Fg) of the continuously fed gaseous reactants (0₂, C₂F₄, and, possibly, C₃F₆) must meet the following conditions:
a) E/V_{liq} is within the range of from 15 to 150, and preferably of from 20 to 100, E being expressed in watts and V_{liq} being expressed in dm³;
b) E/Fg ranges from 0.15 to 1.55, Fg being expressed as litres/hour (I/h) of C₂ F₄ + 0₂ (+ C₃ F₆).

Another important parameter is the value of the gas flow rate Fg with respect to the volume of the liquid phase of the reaction (V_{liq}): said value is interdependent with the above parameters (a) and (b), and should be such that:
c) V_{liq}/ Fg is from 10.10⁻³ to 25.10-³, and preferably from 10.10⁻³ to 17.10-³.

It is evident that the operating conditions of the process according to the present invention are considerably different from those of the process disclosed and exemplified by the above US patent, due to a considerably higher intensity of radiation with respect to the reaction volume (liquid phase) and the flow rate of the gaseous reactants. Furthermore, the flow rate of the gaseous reactants with respect to the reaction volume (liquid phase) is maintained at lower values.

It was not foreseeable that by employing a specific radiation intensity with respect to both the volume of the reactant liquid phase and the flow rate of the gaseous reactants, which is much higher than the ones generally used in the processes of the prior art, not only the conversions but also the yields of useful products can be improved substantially.

The liquid reaction phase, contained in the reactor, is exposed to U.V. radiation emitted by a lamp of known type, with a wavelength within the range of from 200 to 600 nm.

The other operating conditions of the process according to the present invention fall within the scope of the processes known from the above patent and still other patents of the applicant.

The reaction is carried out at a temperature of from -30 to -100°C by passing the gaseous reactants 0₂ and C₂ F₄ and possibly also C₃F₆, through the reaction liquid initially composed of only liquified C₃F₆ and, subsequently of a mixture of said C₃F₆ and the liquid products formed during the reaction.

The gaseous mixture of 0₂ + C₂ F₄ is introduced continuously, and the molar ratio of 0₂/C₂ F₄ is kept within the range of from 1 to 10, preferably of from 3 to 9.

The reactant mixture is maintained at a temperature of from -30° C to -100°C, preferably of from -40 to -80° C.

The reaction can be carried out under atmospheric, subatmospheric and superatmospheric pressures. The product of the photo-oxidation, containing peroxy groups and having a very high molecular weight (i.e., a high viscosity) in consideration of the usual applications of the end product, is subjected to a thermal or photochemical treatment for the elimination of the peroxy groups according to methods known from, e.g., GB-A 1,226,566. The fluorination of the end groups is (then) carried out with fluorine gas thermally at temperatures of from 100 to 250 °C or in the presence of U.V. light at temperatures of from 50 to 120°C, see US-A-4,664,766.

The thermal decomposition of the peroxide groups may be only partial, the residual peroxy oxygen being eliminated during the subsequent fluorination step (see US-A-4,664,766), a controlled reduction of the molecular weight being thus achieved, as disclosed in US-A-4,668,357.

The regulation of the molecular weight can be further accomplished by means of a catalytic thermal cracking treatment at a temperature of from 150° to 380 °C, in the presence of AIF₃ or any other catalytically active fluorides, oxyfluorides or oxides, as disclosed in EP-A 167,258, 224,201 and 223,238, followed by the fluorination with fluorine gas as described above in order to convert the oxygen-containing terminal groups into neutral perfluoroalkyl groups.

The catalytic thermal cracking treatment furthermore decreases the content of -CF₂0- units present in the product, whereby an end product which contains a minimum number of such units can be obtained.

The peroxy product from the photo-oxidation can optionally be directly subjected to the above catalytic thermal cracking treatment.

The following examples are given only for illustrative purposes.

### Example 1

At a temperature of -60° C, 800 g of C₃ F₆ were placed into a cylindrical glass reactor (volume 500 ml, optical path 1 cm), equipped with an internal coaxial quartz sheath, a dipping tube for the introduction of gases, a sheath with a thermocouple for determining the internal temperature and a reflux condenser maintained at a temperature of -80 _{°} C. Through the dipping tube a gaseous mixture consisting of 27 I/h of 0₂ and 9 I/h of C₂ F₄ was introduced in the reactor. By means of a cooling bath placed around the reactor the temperature of the liquid reactant phase was maintained at -60° C throughout the whole experiment.

After introducing an U.V.-lamp (HANAU TQ 150 type; emitting 47 W of U.V. light having a wavelength in the range of from 200 to 600 nm and 12 W of energy corresponding to radiation of ≤300 nm)into the quartz sheath, said lamp was turned on, and irradiation and introduction of the reactant gases were continued for 5 hours.

After 5 hours of irradiation, the lamp was turned off, the reactor was vented, and from the reactor the unreacted C₃F₆ was recovered by evaporation at room temperature. Thus 420 g of oily polymeric residue were obtained. Said residue had a content of active (peroxy) oxygen of 2.75%, based on iodometric titration. The ¹⁹F-NMR spectrum revealed polyetherpolyperoxy chains, wherein the total C₃F₆/C₂F₄. ratio was 0.85 and the ratio CF₂/C₃ F₆ + C₂F₄ was 0.019. The average number molecular weight was 6,630 and the viscosity of the product was 983 mm²/s (cSt) at 20 °C, as determined with an OSTWALD-FENSKE viscometer. The yield with respect to C₂ F₄ in the obtained oil was 93%.

The results of Examples 1-8 are summarized in Table 1.

### Example 2

By using the same equipment as in Example 1, a photooxidation was carried out under the same conditions, as regards temperature and intensity of irradiation, as in Example 1, but the flow rate of C₂ F₄ was changed. In this case, 3 I/h of TFE were employed. After 5 hours of reaction, 213 g of a polymer with a content of active oxygen of 0.7% (based on iodometric titration) were isolated from the reactor . According to ¹⁹F-NMR the polymer was composed of polyether-polyperoxy chains, wherein the ratio C₃F₆/C₃F₄. was 2.11, the ratio CF₂/C₃F₆ + C₂F₄ was 0.063, and the average number molecular weight was 5,700. The viscosity of the product was 955 mm²/s (cSt) at 20° C.

### Example 3

By using the same equipment as in Example 1, a photooxidation was carried out under the same conditions of temperature, flow rate of 0₂ and flow rate of C₂ F₄ as in Example 2, but the intensity of the lamp was reduced. In this case 33W of U.V. radiation within the range of from 200 to 600 nm and 8.5 W of U.V. radiation of ≤300 nm were used.

After 5 hours of reaction, 147 g of a polymer were recovered from the reactor, which polymer, as revealed by¹⁹F-NMR, was composed of polyether-polyperoxy chains wherein the ratio C₃F₆/C₂F₄ was 0.74, the ratio CF₂/C₃ F₆ + C₂ F₄ was 0.0112, and the average number molecular weight was 12,000.

According to iodometric analysis, the product had a content of active oxygen of 3.86% and showed a viscosity of 5,330 mm²/s (cSt) at 20° C.

### Example 4

By using the same equipment as in Example 1, a photooxidation was carried out under the same conditions of temperature and intensity of irradiation as in Example 1, but the flow rate of the reactants was changed. In this case, 5 I/h of C₂F₄ and 31 I/h of 0₂ were introduced. After 5 hours of reaction, 338 g of a polymer were recovered from the reactor. According to iodometric analysis, said polymer showed a content of active oxygen of 1.9%.

The viscosity of the product was 637 mm²/s (cSt) at 20° C.

The ¹⁹ F-NMR analysis showed that the polymer was composed of polyether-polyperoxy chains wherein the ratio C₃F₆/C₂F₄. was 1.18, the ratio CF₂/C₃F₆ +C2F4 was 0.027, and the average number molecular weight was 5,200.

### Example 5

By using the same equipment as in Example 1, a photooxidation was carried out under the same conditions as in Example 1, but at a temperature of -40 °C. In this case, after 5 hours of reaction, 488 g of a polymer were recovered from the reactor. According to iodometric analysis, said polymer showed a content of active oxygen of 1.9%.

The viscosity of the product was 210 mm²/s (cSt)at 20 °C.

¹⁹F-NMR analysis showed the polymer to be composed of polyether-polyperoxy chains wherein the ratio C₃F₆/C₂F₄ was 1.17, the ratio CF₂/C₃F₆ + C₂F₄ was 0.032, and the average number molecular weight was 3,000.

The yield of C₂F₄ in the obtained oil was 89%.

### Example 6

By using the same equipment as in Example 1, a photooxidation was carried out under the same conditions as in Example 2, but at a temperature of -40 ° C. After 5 hours of reaction, 479 g of a polymer were isolated from the reactor. According to iodometric analysis, said polymer showed a content of active oxygen of 0.92%.

The viscosity of the product was 188 mm²/s (cSt) at 20 ° C.

The ¹⁹-NMR analysis showed the polymer to be composed of polyether-polyperoxy chains wherein the ratio C₃F₆/C₂F₄ was 1.91, the ratio CF₂/C₃ F₆ + C₂ F₄ was 0.038, and the average number molecular weight was 3,300.

### Example 7

By using the same equipment as in Example 1, a photooxidation was carried out under the same conditions as in Example 3, but at a temperature of -40 _{°} C.

The radiation energy at a wavelength of ≦300 nm was 8.5 W.

After 5 hours of reaction, 265 g of a polymer were recovered from the reactor. According to iodometric analysis the polymer had a content of active oxygen of 1.47%.

The viscosity of the product was 504 mm²/s (cSt) at 20 ° C.

¹⁹F-NMR analysis showed the polymer to be composed of polyether-polyperoxy chains wherein the ratio C₃ F₆/C₂ F₄ was 1.47, the ratio CF₂/C₃ F₆ + C₂ F₄ was 0.021, and the average number molecular weight was 4,200.

### Example 8

By using the same equipment as in Example 1, a photooxidation was carried out under the same conditions as in Example 4, but at a temperature of -40 ° C.

After 5 hours of reaction, 453 g of a polymer were discharged from the reactor. According to the iodometric analysis the polymer had a content of active oxygen of 1.26%.

The viscosity of the product was 226 mm²/s (cSt) at 20 ° C.

¹⁹F-NMR analysis showed the polymer to be composed of polyether-polyperoxy chains, wherein the ratio C₃F₆/C₂F₄ was 0.024, and the average number molecular weight was 3,400.

### Example 9

A stainless-steel cylindrical reactor was used, which reactor was equipped with a coaxial quartz sheath. The ratio E/V_{liq} was 80, the ratio E/Fg was 0.88, and the ratio V_{liq}/F_{g} was 11x10⁻³.

The reaction was started with an initial charge of liquid C3 F6 in the reactor. During the reaction, a flow rate of the reactant gases was maintained which was 2,730 I/h for 0₂ and 1,344 I/h for C₂ F₄.

The reaction was carried out for 42 hours. The reaction product was continuously discharged, and C₃ F₆ was replenished in a way such as to maintain a constant concentration of the oil in the reactor.

The relevant operating conditions are reported in Table 1. In the same table, the data reported in the Examples of the above cited US-A-3,770,792 are given for comparative purposes.

### Example 10

The product obtained in Example 4 was placed in a photochemical reactor and was subjected to a photoreduction at a temperature of 40 ° C in order to eliminate the peroxy power (P.O.). After 12 hours, 321 g of polymer were discharged, placed into a photochemical reactor and subjected to a photo-assisted fluorination at a temperature of 50 ° C (5 I/h of fluorine and 5 I/h of nitrogen). After 10 hours, 314 g of neutral product were obtained (yield 95%). By distillation of the neutral product under vacuum four fractions, A, B, C and D, were obtained, which showed the characteristics reported in Table 2.

The ratios C₃F₆O/C₂F₄O were, respectively:
for A = 1.13; for B = 1.42; for C = 1.32; for D = 1.20; the ratios C₃F₆ O/CF₂O were:
for A = 14.2; for B = 15.5; for C = 14.0; for D = 11.9; the ratios C₂F₄O/CF₂O were:
for A = 12.5; for B = 10.9; for C = 10.2; for D = 9.8.

From this data, one can calculate the ratio: 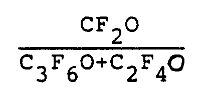 which was:
for A = 3.74%; for B = 3.79%; for C = 4.22%;and for D = 4.64%.

In Table 3 the characteristics of Fomblin ® Y and Z (commercial products) are given for comparative purposes.

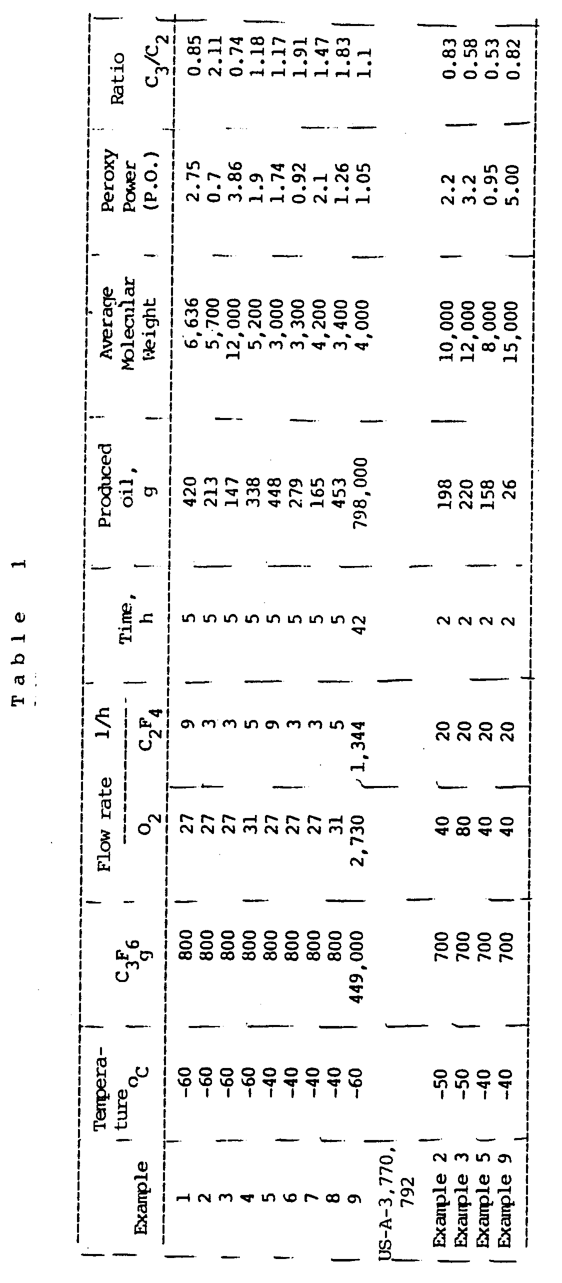

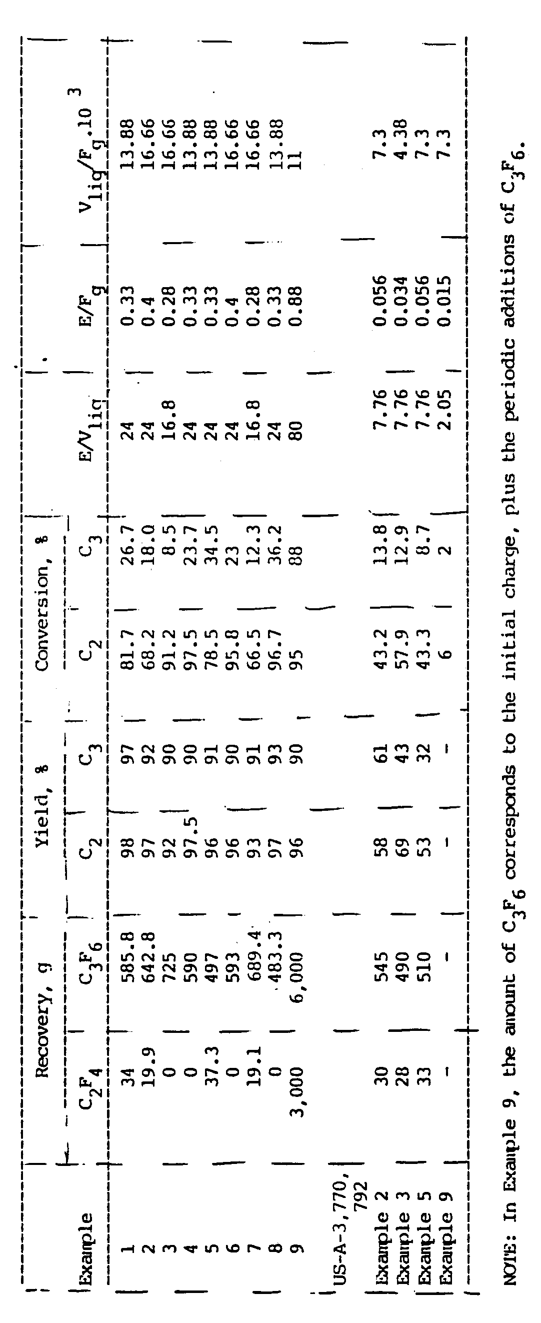

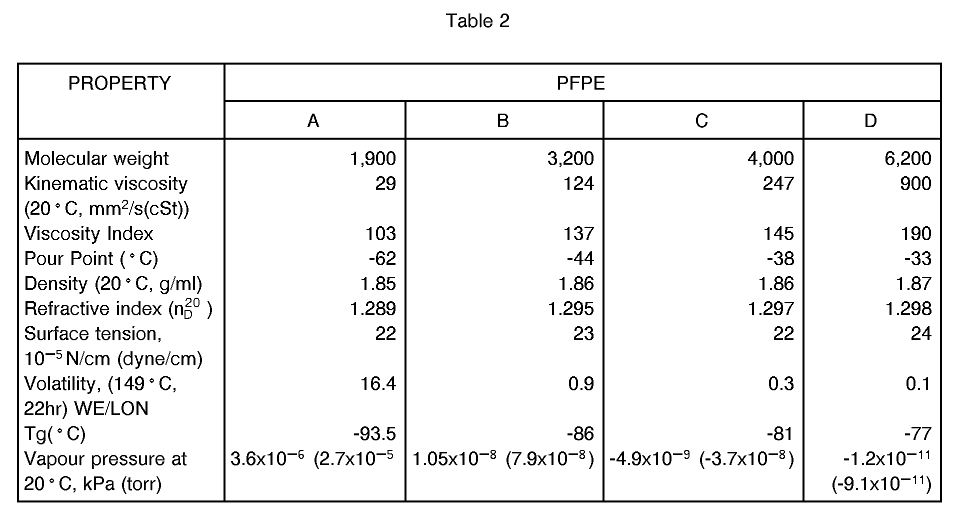

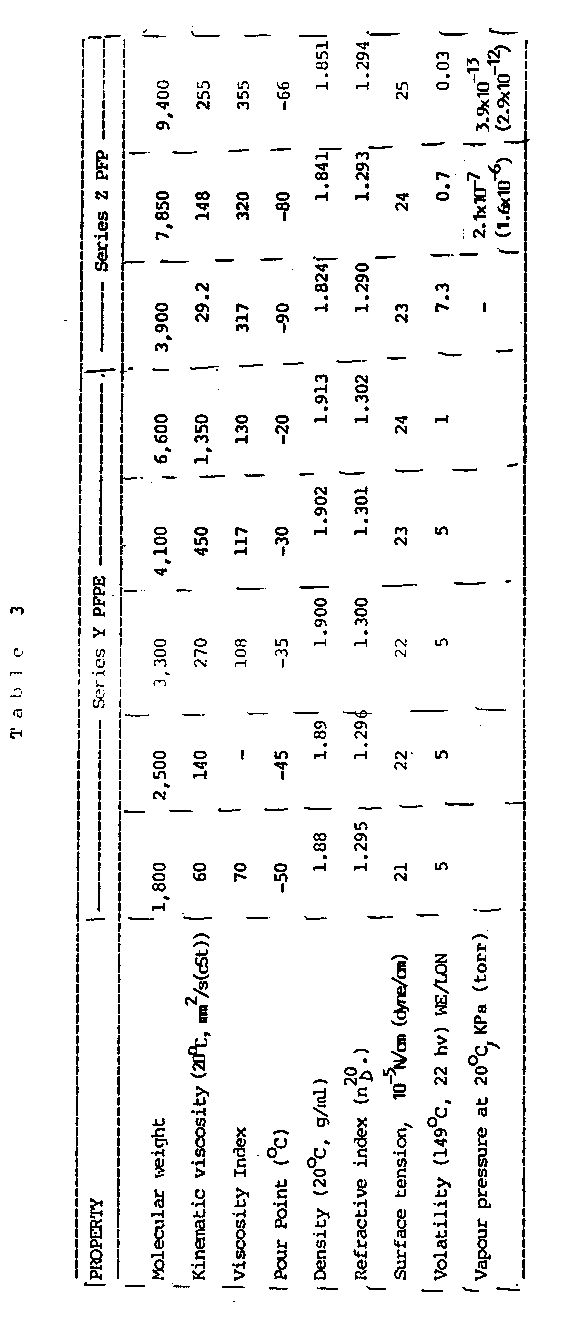

## Claims

1. Process for preparing perfluoropolyethers having the general formula: 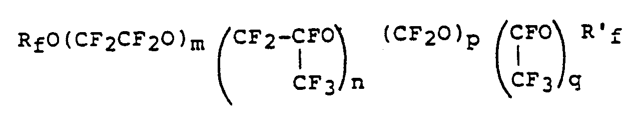 wherein:
R_{f} and R'_{f}, the same or different from each other, are perfluoroalkyl end groups selected from -CF3, -C₂Fs, and -C₃F₇; and
m,n,p and g which represent average values for the above products satisfy the following conditions:
- the sum (m + n + p + q) ranges from 2 to 200;
- the ratio (p + q)/(m + n + p + q) is smaller than or equal to 1/10;
- the ratio n/m ranges from 0.2 to 6;
comprising the following steps:
a) photo-oxidation of a mixture of C₃F₆ and C₂F₄, carried out by passing a gaseous stream of 0₂ and C₂F₄, in a molar ratio of from 1 to 10, through a liquid reaction phase initially composed of C₃F₆ and maintained at a temperature of from -30 ° C to -100 ° C, while irradiating with UV light;
b) thermal or photochemical treatment of the photo-oxidation product in order to totally or partially eliminate the peroxy groups;
c) fluorination with fluorine gas at a temperature of from 100 to 250 ° C or in the presence of U.V. light at 50 to 120 ° C, in order to convert the end groups into perfluoroalkyl groups and to eliminate
any peroxy groups which might possibly still be present; said process being characterized in that the intensity of the radiation used in step (a), expressed as energy E (in W) emitted in the form of radiation of λ ≦300 nm, the volume of the liquid reaction phase V_{liq} (in dm³) and the flow rate of the reactant gases Fg (in 1/h), meet the following conditions:
E/V_{liq} ranges from 15 to 150;
E/Fg ranges from 0.15 to 1.55;
Vlᵢq/Fg ranges from 10.10-³ to 25_{.10}-³_{.}

2. Process for preparing perfluoropolyethers according to claim 1, wherein steps (b) and (c) are carried out simultaneously.

3. Process according to claim 1 or 2, additionally comprising a molecular weight regulation by means of a catalytic thermal cracking treatment, carried out at 150 to 380 ° c in the presence of AIF₃ or any other fluorides, oxyfluorides or oxides with catalytic activity, followed by the fluorination with fluorine gas in order to convert the terminal groups to perfluoroalkyl groups.

4. Process according to any one of claims 1 to 3, wherein the peroxy product from the photo-oxidation step (a) is directly subjected to the catalytic thermal cracking treatment.

## Patentansprüche

1. Verfahren zur Herstellung von Perfluorpolyethern mit der allgemeinen Formel: 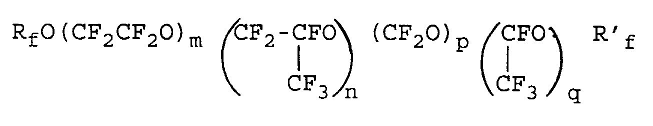 worin:
R_{f} und R'_{f}, gleich oder verschieden voneinander, für Perfluoralkyl-Endgruppen stehen, die aus -CF₃, -C₂F₅ und -C₃F₇ ausgewählt sind; und m, n, p und q, die Durchschnittswerte für die obigen Produkte darstellen, den folgenden Bedingungen genügen:
- die Summe (m + n + p + q) liegt im Bereich von 2 bis 200;
- das Verhältnis (p + q)/(m + n + p + q) ist kleiner als oder gleich 1/10;
- das Verhältnis n/m liegt im Bereich von 0,2 bis 6;
umfassend die folgenden Stufen:
a) Photooxidation einer Mischung von C₃F₆ und C₂F₄, durchgeführt durch Leiten eines gasförmigen Stromes von 0₂ und C₂ F₄ in einem Molverhältnis von 1 bis 10 durch eine flüssige Reaktionsphase, die am Anfang aus C₃F₆ zusammengesetzt ist und bei einer Temperatur von -30 ° C bis -100 ° C gehalten wird, während man mit UV-Licht bestrahlt;
b) thermische oder photochemische Behandlung des Photooxidationsproduktes, um die Peroxy-Gruppen vollständig oder teilweise zu eliminieren;
c) Fluorierung mit Fluor-Gas bei einer Temperatur von 100 bis 250 ° C oder in der Anwesenheit von UV-Licht bei 50 bis 120 ° C, um die Endgruppen in Perfluoralkyl-Gruppen umzuwandeln und jedwede
Peroxy-Gruppen, die möglicherweise noch immer vorhanden sein könnten, zu eliminieren; wobei das Verfahren dadurch gekennzeichnet ist, daß die Intensität der in Stufe (a) verwendeten Strahlung, ausgedrückt als Energie E (in W), die in Form von Strahlung mit λ 300 nm abgegeben wird, das Volumen der flüssigen Reaktionsphase V_{liq} (in dm³) und die Strömungsgeschwindigkeit der Reaktanten-Gase Fg (in I/h), den folgenden Bedingungen genügen:
E/V_{liq} liegt im Bereich von 15 bis 150;
E/Fg liegt im Bereich von 0,15 bis 1,55;
V_{liq}/F_{g} liegt im Bereich von 10 x 10-³ bis 25 x 10-³.

2. Verfahren zur Herstellung von Perfluorpolyethern nach Anspruch 1, in dem die Stufen (b) und (c) gleichzeitig durchgeführt werden.

3. Verfahren nach irgendeinem der Ansprüche 1 oder 2, zusätzlich umfassend eine Molekulargewichtsregulierung mit Hilfe einer katalytischen thermischen Crackungs-Behandlung, durchgeführt bei 150 bis 380 ° C in Anwesenheit von AIF₃ oder irgendwelchen anderen Fluoriden, Oxyfluoriden oder Oxiden mit katalytischer Aktivität, gefolgt von der Fluorierung mit Fluor-Gas, um die Endgruppen in Perfluoralkyl-Gruppen umzuwandeln.

4. Verfahren nach irgendeinem der Ansprüche 1 bis 3, in dem das Peroxy-Produkt aus der Photooxidations-Stufe (a) direkt der katalytischen thermischen Crackungs-Behandlung unterzogen wird.

## Revendications

1. Procédé de préparation de perfluoropolyéthers ayant la formule générale : 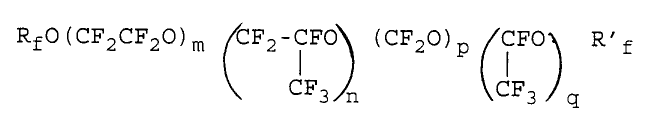 dans laquelle :
- R_{f} et R'_{f}, identiques ou différents l'un de l'autre, représentent des groupes terminaux perfluoroalkyle choisis parmi -CF₃, -C₂F₅ et -C₃F₇; et
- m, n, p et q, qui représentent des valeurs moyennes pour les produits ci-dessus, satisfont les conditions suivantes :
- la somme (m + n + p + q) se situe dans une plage allant de 2 à 200 ;
- le rapport (p + q)/(m + n + p + q) est inférieur ou égal à 1/10 ;
- le rapport n/m se situe dans une plage allant de 0,2 à 6 ;
ledit procédé comprenant les étapes suivantes :
(a) la photo-oxydation d'un mélange de C₃F₆ et C₂ F₄, que l'on conduit en faisant passer un courant gazeux d'0₂ et C₂F₄, dans un rapport molaire de 1 à 10, à travers une phase réactionnelle liquide, initialement composée de C₃F₆ et maintenue à une température de -30 °C à -100°C, tout en irradiant avec de la lumière UV ;
(b) le traitement thermique ou photochimique du produit de photo-oxydation afin d'éliminer totalement ou partiellement les groupes peroxy ;
(c) la fluoration par du fluor gazeux à une température de 100 à 250 ° C ou en présence de lumière UV à une température de 50 à 120 ° C, afin de convertir les groupes terminaux en groupes perfluoroalkyle et d'éliminer tous groupes peroxy qui pourraient éventuellement encore être présents
ledit procédé étant caractérisé par le fait que l'intensité du rayonnement utilisé à l'étape (a), exprimée en tant qu'énergie (E) (en W) émise sous la forme de rayonnement de λ 300 nm, le volume de la phase réactionnelle liquide V_{liq} (en dm³) et la vitesse d'écoulement des gaz réactifs Fg (en 1/h), satisfont les conditions suivantes :
E/V_{liq} se situe dans la plage allant de 15 à 150 ;
E/Fg se situe dans la plage allant de 0,15 à 1,55 ;
Vlᵢq/Fg se situe dans la plage allant de 10 x 10-³ à 25 x 10-³.

2. Procédé de préparation de perfluoropolyéthers selon la revendication 1, dans lequel les étapes (b) et (c) sont conduites simultanément.

3. Procédé selon l'une des revendications 1 et 2, comprenant en outre une régulation de la masse moléculaire au moyen d'un traitement de craquage thermique catalytique, conduit à une température de 150 à 380 ° C en présence d'AIF₃ ou de tous autres fluorures, oxyfluorures ou oxydes ayant une activité catalytique, en faisant suivre par la fluoration par du fluor gazeux, afin de convertir les groupes terminaux en groupes perfluoroalkyle.

4. Procédé selon l'une quelconque des revendications 1 à 3, dans lequel le produit peroxy provenant de l'étape (a) de photo-oxydation est directement soumis au traitement de craquage thermique catalytique.
